# EUROPEAN PATENT SPECIFICATION

(11) **EP 0 972 598 B1**
(45) Date of publication and mention of the grant of the patent: **04.01.2006**
(21) Application number: 99202186.5
(22) Date of filing: 06.07.1999
(51) Int. Cl.: B23B 39/16

(54) **Method and apparatus for drilling holes in the shell of a cylinder**
Methode und Gerät zum Bohren von Löchern in eine Zylinderwand
Méthode et appareil de forage de trous dans la paroi d' un cylindre

(30) Priority: 13.07.1998 FI 981599
(43) Date of publication of application: 19.01.2000
(73) Proprietor: Pikoteknik Oy, 86110 Parhalahti (FI); Voith Paper Patent GmbH, 89522 Heidenheim (DE)
(72) Inventor: Vesterlund, Ingmar, 86100 Pyhäjoki (FI); Kugler, Georg, 89522 Heidenheim (DE); Oechsle, Markus, 73566 Bartholomä (DE); Kahl, Peter, 89547 Gerstetten (DE)
(74) Representative: Järveläinen, Pertti Tauno Juhani

(56) References cited:
- EP-A- 0 545 879
- US-A- 1 884 752
- US-A- 4 674 925

## Description

The present invention relates to a method according to the preamble of claim 1 for drilling holes in the shell of a paper machine cylinder, with said cylinder being unremoved from its operating position in a paper machine.

The invention also concerns an apparatus according to the preamble of claim 4 for drilling holes in the shell of a paper machine cylinder.

A method and an apparatus according to the preamble of claim 1, respectively claim 4, are known for example from EP-B-0 545 879.

In the art are known several types of equipment designed for drilling holes in the shell of a cylinder in a paper machine. Some prior-art embodiments are disclosed in patent publications EP-B-0448947 and EP-B-0545879. EP-B-0448947 describes a method and an apparatus for on-site drilling of perforating holes in the shell of a cylinder, particularly a dryer cylinder, in a paper machine with the cylinder being unremoved from the paper machine. Said apparatus comprises a spindle box equipped with a plurality of spindle heads adapted driven by a drive motor. The spindle box houses the drive motor which is arranged to move the spindle box with regard to the framework of the drilling apparatus when the drills are actuated toward the cylinder surface to be machined. Furthermore, said apparatus includes a drilling jig adapted to support and tension the framework of said drilling apparatus between the guideways and the shell of the cylinder to be machined. Further, the apparatus includes slide bushings arranged to guide the framework of the drilling apparatus along the guideway assembly when the apparatus is being moved into the next drilling position in the direction of the cylinder axis. The design of the apparatus uses guideways supported on the cylinder next to that being machined. EP-B-0545879 describes a further development of the above-outlined apparatus, whereby each spindle head is provided with a separate slide frame adapted individually movable in the lateral direction. These prior-art apparatuses are hampered, among other drawbacks, by their complicated construction which results in a limited range of spindle head movement, for instance. Furthermore, the system needs the use of a drilling jig, whereby each different drilling pattern requires an individual drilling jig.

US 4,674,925 discloses a drilling equipment with a gang drill head having a row of drills spaced according to repeated patterns of holes in a tubular member such as a suction roll in a paper-making machine which are clogged and are to be cleared by drilling the same, the drill head being guided for longitudinal movement along a guide member positioned upon the roll for circumferential incremental movement to effect radial movements of the rotating drills for the full circumference of the roll and the head including longitudinal adjustment of individual drill supports in accordance with the spacings of the repeated patterns of holes in the roll. The drilling equipment is secured sequentially in circumferentially spaced positions upon the roll to de drilled.

It is an object of the present invention to provide such an entirely novel type of method and apparatus for drilling the shell of a cylinder that is capable of overcoming drawbacks of the prior-art techniques.

The method and apparatus according to the invention include the features of the claims 1 and 4 respectively.

A preferred embodiment of the method according to the invention is characterized in that the play is eliminated by applying such a support member on said adjacent cylinder that can exert tangential forces on said cylinder.

The method according to the invention is further characterized in that on the cylinder being machined is applied at least one support member which is a part of the drilling apparatus.

The apparatus according to the invention is principally characterized in that the drilling apparatus is fixed to the adjacent cylinder and that the drilling apparatus includes means for eliminating the disturbing influence of mechanical play in the structures of said adjacent cylinder.

A preferred embodiment of the apparatus according to the invention is characterized in that the drilling apparatus includes support members capable of exerting tangential forces on said adjacent cylinder.

A further preferred embodiment of the invention is characterized in that the said support members are pneumatic cylinders adapted into the framework of the drilling apparatus and are in their operating positions driven tight against the cylinder to be machined.

The method and apparatus according to the invention offer a number of significant benefits. The elimination of play from the structures of the adjacent cylinder prevents even the smallest displacement of the drilling apparatus during the drilling operation, whereby unwanted forces are eliminated that could lead to the breaking of drills. The construction of the apparatus facilitates drilling without a drilling jig. Simultaneously, unwanted movements of the cylinder being drilled are prevented. The arrangement according to the invention offers a the application of a controllable holding force. The arrangement provides a drilling apparatus with a construction which is extremely cost-advantageous and simpler than that of the prior-art embodiments.

In the context of the present invention, the term paper machine is used when reference is made to machines used in making a material web including a paper machine, a board machine or a cellulosic web dryer. The term cylinder is used when reference is made generally to cylindrical objects such as rolls, dryer cylinders and the like.

In the following, the invention will be described in greater detail with the help of an exemplifying embodiment by making reference to the appended drawings in which
Figure 1 shows schematically an apparatus according to the invention installed on site into its operating position;
Figure 2 shows a view of the apparatus according to the invention in direction A marked in Fig. 1;
Figure 3 shows a view of the apparatus according to the invention in direction B marked in Fig. 1;
Figures 4A-4C show a drilling module in the apparatus according to the invention;
Figure 5 shows a partially sectional view of a multispindle drilling module in the apparatus according to the invention; and
Figures 6A - 6C show schematically the position control arrangement of drills for one drilling module as seen from the direction of the cylinder being machined.

The method according to the invention concerns a technique for drilling holes in the shell of a paper machine cylinder s2, with the cylinder being unremoved from its operating position in the paper machine, whereby the drilling apparatus 1 is fixed to the adjacent cylinder s1. In the method the disturbing influence of mechanical play in the structures of said adjacent cylinder s1 is eliminated prior to drilling. The mechanical play is eliminated by applying such a support member 29 on said adjacent cylinder s1 that can exert tangential forces on said cylinder. On the cylinder s2 being machined is applied at least one support member 29 which is a part of the drilling apparatus 1. Thus, the support member 29 also eliminates unwanted movement of the cylinder s2 being machined.

The apparatus according to the invention concerns equipment for drilling holes in the shell of a paper machine cylinder s2, said apparatus comprising a framework 2 with a construction supportable on the structures of the paper machine and a feed frame 6 which, supported by the framework 2, is adapted to be movable toward the surface of the cylinder to be machined, said feed frame comprising a plurality of drilling modules adapted to be driven by means of a drive unit. For drilling, the apparatus is fixed to the adjacent cylinder s1 and the drilling apparatus includes means for eliminating the disturbing influence of mechanical play in the structures of said adjacent cylinder s1. For this purpose, the drilling apparatus includes support members 29 capable of exerting tangential forces on said adjacent cylinder s1. Said support members 29 are pneumatic cylinders adapted into the framework 2 of the drilling apparatus and are in their operating positions driven tight against the cylinder s2 to be machined.

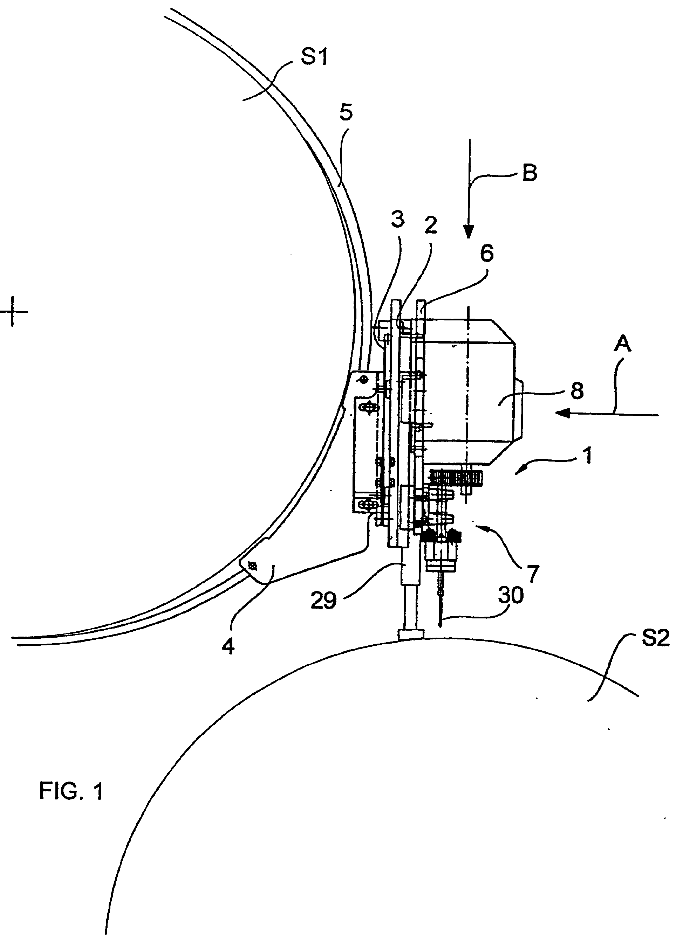

With reference to Fig. 1, therein is shown a preferred embodiment of the apparatus 1 according to the invention in its operating position supported on the structures of a paper machine such as a first cylinder s1 of the paper machine. The cylinder s2 to be drilled is situated laterally offset below the first cylinder s1. The apparatus 1 includes a framework 2 with a construction supportable on the structures of the paper machine. The framework 2 is supported on the first cylinder s1 by means of support members 3, 4 such as curved plates 4 resting on the shell of the cylinder. The curved plates are further connected to the framework 2. Advantageously, the apparatus is anchored by means of fastening belts 5 to the surface of the first cylinder s1. Thus, the framework 2 will be aligned essentially parallel to the axis of the cylinder s1 at least over a portion of the cylinder width.

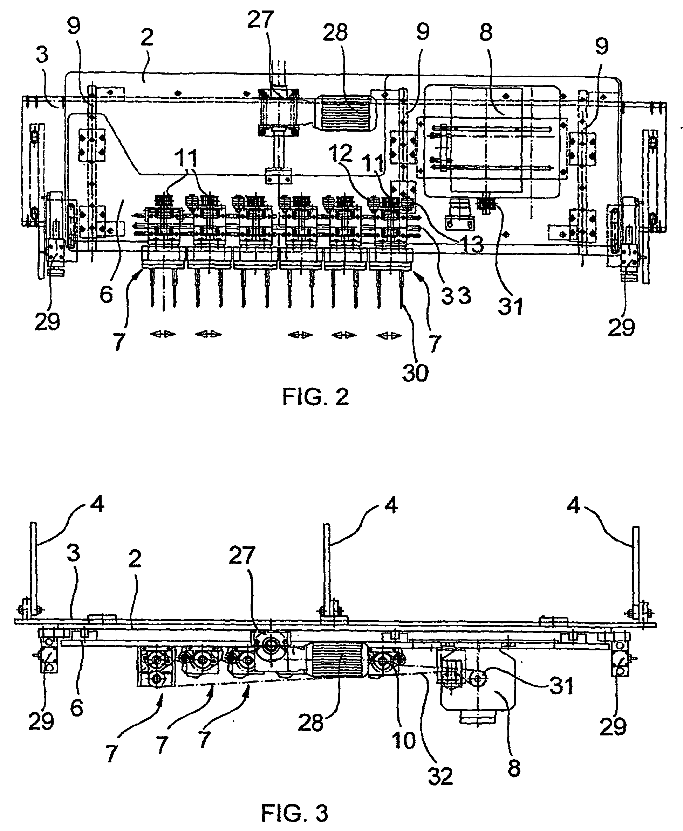

The apparatus 1 includes a feed frame 6 which, supported by the framework 2, is adapted to be movable toward the surface of the cylinder s2 being machined, said feed frame comprising a plurality of drilling modules 7 adapted to be driven by means of a drive unit 8. On the framework 2 are adapted guideways 9 along which the feed frame 6 can be moved in order to provide the feed movement of the drilling modules 7 as well as the withdrawal movement thereof outward from the cylinder surface after the completion of the drilling step. The drilling modules 7 include at least two spindle heads. The embodiment illustrated in Fig. 2 has six two-spindle drilling modules 7 adapted for simultaneous drive by means of a drive unit 8.

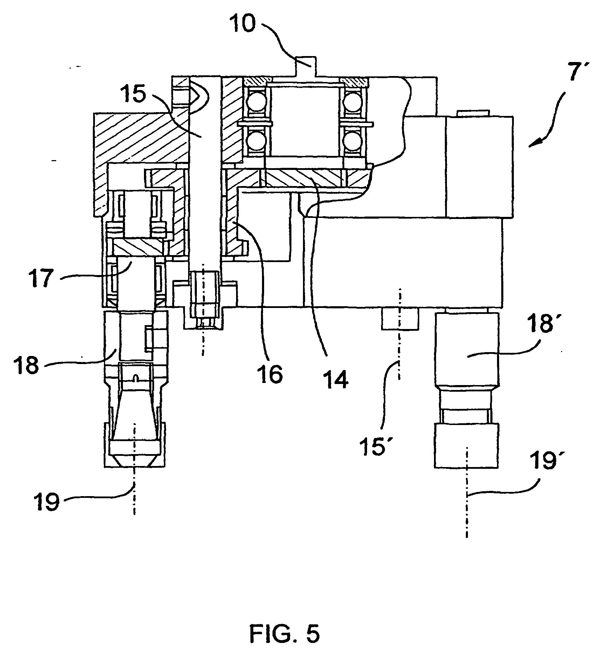

Each drilling module 7 has a central drive shaft which in the embodiment illustrated in the diagrams is belt-driven. The belt drive train is accomplished by providing the drive shaft 10 with a belt drive pulley 11 and the drilling module 7 with belt idler pulleys 12, 13. On the drive shaft 10, so as to rotate therewith, is mounted a first gear wheel 14 (cf. Fig. 5), which is adapted to drive a gear transmission 16 of an intermediate shaft 15 that further drives a spindle shaft 17. In the embodiment illustrated in the diagrams, each drilling module 7 includes two spindle heads 18, 18', driven in the above-described manner by the drive shaft 10 of the drilling module. At least one spindle head 18, 18' in each drilling module is arranged rotatable about the intermediate shaft 15, 15' of the drilling module. Thus, the mutual distance of the spindle shaft centers 19, 19' from each other can be adjusted in each drilling module separately by means of rotating at least one spindle head 18, 18' in the drilling module about the intermediate shaft 15, 15' of the drilling module. Furthermore, the entire drilling module, or at least the spindle head housing the spindle shafts is arranged rotatable about the drive shaft 10, thus making it possible to control the drilling pattern produced by each drilling module 7. Resultingly, the spindle shaft centers 19, 19' of a two-spindle drilling module can be readily aligned on a desired line.

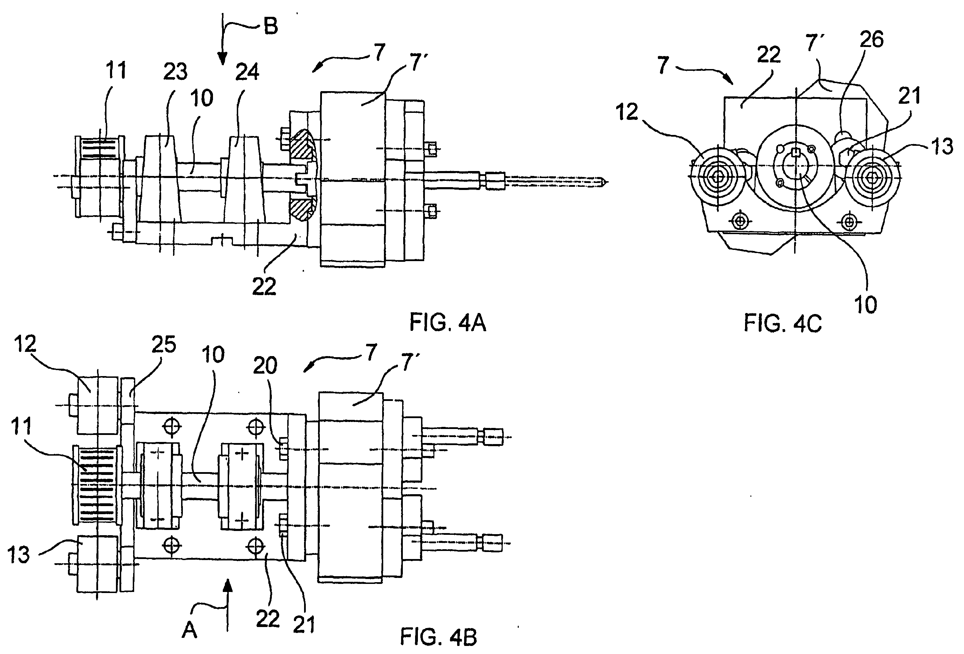

Each drilling module 7 has means 20, 21 for locking the drilling module into a desired position. The drilling module 7 includes a mounting plate 22 (cf. Fig. 4) of the spindle head 7', said mounting plate having arranged thereon the bearing assemblies 23, 24 of the drive shaft 10 as well as support elements 25 for mounting the belt idler pulleys 12, 13. The spindle head mounting plate 11 is provided with holes, slots or similar openings 26 for fixing the spindle head into a desired position by means of fasteners 20, 21 such as screws or bolts. The drilling modules 7 are mounted by their mounting plates 22 in a movable manner on a guideway 33 adapted on the feed frame 6. Resultingly, a still further facility of controlling the layout of the drilling pattern can be obtained by altering the position of the drilling modules 7 in the feed frame 6. In Fig. 2, such a position control possibility is indicated by arrows.

In Figs. 2 and 3 is shown schematically a drilling apparatus 1 according to the invention. The drilling apparatus is built on a framework 2. The framework 2 includes a mounting member 3 to which the curved backing plates 4 are connected. The framework consists of a body 2 including guideways for the movement of the feed frame 6, and an actuator assembly 27, 28 of the feed frame, capable of moving the feed frame 6 with respect to the drilling apparatus body 2. The actuator of the feed frame 6 comprises a conventional screw lift (jack) 27, driven by means of a drive motor 28. Into the feed frame 6 are adapted a number of parallel drilling modules 7, all driven by means of a common drive unit 8. The drive unit is mounted on the feed frame.

The framework, advantageously the body 2 thereof, is provided with support members 29, advantageously comprising pneumatic cylinders, which, prior to the machining operation, are driven against the surface of the cylinder s2 to be machined, whereby any possible play, that is, the instability in the bearings of the cylinder s1 and the support structures thereof acting as the mounting base of the drilling apparatus is minimized and the drilling operation itself becomes very stable. This arrangement prevents, for instance, unwanted movements of the drilling apparatus during the drilling operation, whereby the breaking of the drills 30 is eliminated.

The drilling operation takes place as follows. The drilling apparatus is first mounted on the cylinder s1 next closest to the cylinder s2 to be machined by means of fastening belts. The spindle heads of the drilling modules 7 are next adjusted into a desired position and the spindle head 7' of the drilling module is rotated with respect to the drive shaft 10 if so needed. Furthermore, the mutual distances between the drilling modules 7 are set as required to obtain the desired drilling pattern. The support members 29 are driven against the surface of the cylinder s2 to be machined. With the help of the actuator assembly 27, 28, the feed frame 6 is moved toward the cylinder to be machined. Finally, the rotary drive unit 8 of the spindle heads 30 is switched on. After the completion of the drilling step, these actions are repeated in a reverse order.

The cylinder s2 being machined is rotated between the drilling steps by means of a rotary drive system (not shown in the diagrams) about the cylinder shaft incrementally by a given angle into the next drilling position. One type of such a rotary drive system is described in patent publication EP-B-0448947. However, such a rotary drive system can rotate the cylinder only by increments determined by the pitch of the gear wheel mounted in the drive unit. Hence, each different size of incremental angle of rotation would need a separate gear wheel. To overcome this limitation, a conventional indexing wheel can be used to convert the increment angle of rotation into a suitable value. The cylinder being machined is locked into a fixed position for the duration of the machining step.

In Fig. 3 the rotational drive of the drilling modules is partially visible. The drive means 8, which advantageously is a conventional electric motor, transmits its power feed from the motor output shaft 31 via a belt transmission train 32 to the drive shafts 10 of the drilling modules 7, wherefrom the power feed is distributed individually to each of the spindle heads carrying the drills 30.

In Figs. 4A-4C is shown one of the drilling modules and in Fig. 5 one spindle head 7' of the drilling module. The spindle shaft centers 19, 19' are made rotatably adjustable about each of the intermediate shafts 15, 15', the number of which in the embodiment illustrated in the diagram is two.

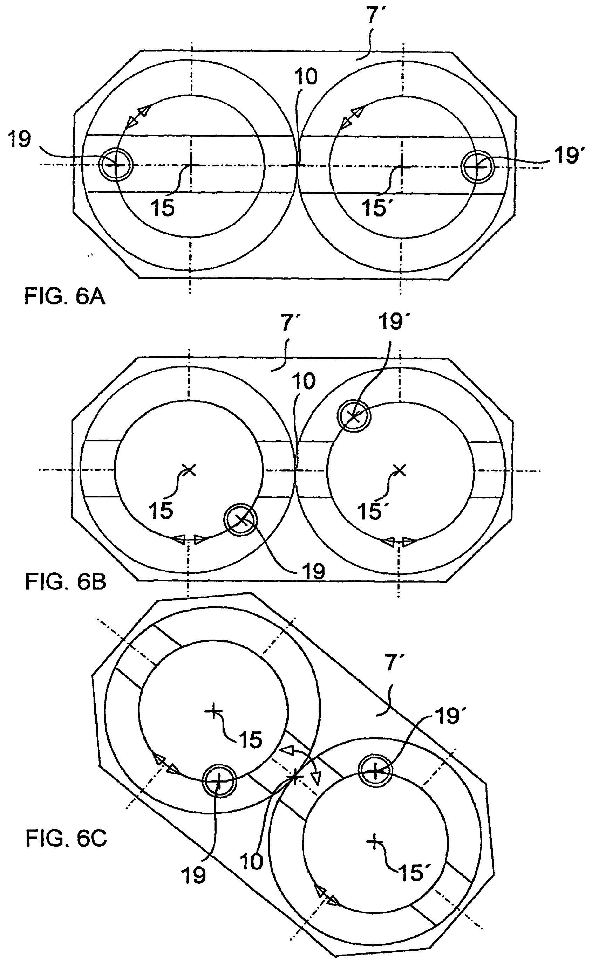

The position control of the drilling module is illustrated in schematic manner in Figs. 6A, 6B and 6C. In Fig. 6A the mutual distance between the spindle shaft centers 19, 19' of the two-spindle head 7' is shown driven into the maximally outdistanced position. However, the spindle head 7' of the drilling module has not been rotated about the drive shaft 10. In Fig. 6B both spindle shaft centers 19, 19' are shown rotated about the intermediate shaft 15, 15'. Then the mutual distance between the spindle shaft centers 19, 19' becomes smaller than in Fig. 6A, and additionally, the drills are offset at a distance from the centerline of drilling. When required, the drilling pattern may further be controlled by rotating the frame of the spindle head 7' about the center axis 10, whereby it is possible to bring the spindle shaft centers 19, 19' to the centerline of drilling, for instance.

To those versed in the art it is obvious that the invention is not limited by the embodiments described above, but rather, can be varied within the spirit and scope of the appended claims.

## Claims

1. A method for drilling holes in the shell of a paper machine cylinder (s2), with said cylinder being unremoved from its operating position in a paper machine, in which method a drilling apparatus (1) is fixed to the adjacent cylinder (s1), **characterized in that** the influence of mechanical play in the structures of said adjacent cylinder (s1) is eliminated prior to drilling.

2. A method as defined in claim 1, **characterized in that** the mechanical play is eliminated by applying such a support member (29) on said adjacent cylinder (s1) that can exert tangential forces on said cylinder.

3. A method as defined in claim 1 or 2, **characterized in that** on the cylinder (s2) being machined is applied at least one support member (29) which is a part of the drilling apparatus (1).

4. An apparatus for drilling holes in the shell of paper machine cylinder (s2), said apparatus comprising a stationary framework adapted supportable on the structures of the paper machine and a feed frame adapted movable along said stationary framework radially toward the shell of said cylinder, said feed frame carrying a plurality of drilling modules adapted rotatable by means of a drive unit, wherein the apparatus is fixable to the adjacent cylinder (s1) **characterized in that** the drilling apparatus includes means for eliminating the influence of mechanical play in the structures of said adjacent cylinder (s1).

5. An apparatus as defined in claim 4, **characterized in that** the drilling apparatus includes support members (29) capable of exerting tangential forces on said adjacent cylinder (s1).

6. An apparatus as defined in claim 4 or 5, **characterized in that** said support members (29) are pneumatic cylinders adapted into the framework (2) of the apparatus and are in their operating positions driven against the cylinder (s2) to be machined.

## Patentansprüche

1. Ein Verfahren zum Bohren von Bohrungen in den Mantel eines Papiermaschinenzylinders (s2), wobei der genannte Zylinder unentfernt von seiner Betriebsposition in einer Papiermaschine verbleibt, in welchem Verfahren eine Bohrvorrichtung (1) an dem benachbart angeordneten Zylinder (s1) befestigt wird, **dadurch gekennzeichnet, dass** der Einfluss eines mechanischen Spiels in den Strukturen des genannten benachbart angeordneten Zylinders (s1) vor dem Bohren eliminiert wird.

2. Ein Verfahren, wie es in Anspruch 1 beschrieben wird, **dadurch gekennzeichnet, dass** das mechanische Spiel **dadurch** eliminiert wird, dass ein solches Stützelement (29) auf den genannten benachbart angeordneten Zylinder (s1) aufgebracht wird, welches Tangentialkräfte auf den genannten Zylinder ausüben kann.

3. Ein Verfahren, wie es in Anspruch 1 oder 2 beschrieben wird, **dadurch gekennzeichnet, dass** auf den Zylinder (s2), welcher maschinell bearbeitet wird, wenigstens ein Stützelement (29) aufgebracht wird, welches ein Teil der Bohrvorrichtung (1) ist.

4. Eine Vorrichtung zum Bohren von Bohrungen in den Mantel eines Papiermaschinenzylinders (s2), wobei die genannte Vorrichtung ein stationäres Fachwerk umfasst, welches derart angepasst ist, dass es tragbar auf den Strukturen der Papiermaschine ist, und einen Führungsrahmen, welcher derart angepasst ist, dass er entlang des genannten stationären Fachwerkes radial in Richtung des Mantels des genannten Zylinders bewegbar ist, wobei der genannte Führungsrahmen eine Vielzahl von Bohrmodulen trägt, welche derart angepasst sind, dass sie mittels eine Antriebseinheit rotierbar sind, wobei die Vorrichtung an dem benachbart angeordneten Zylinder (s1) befestigbar ist, **dadurch gekennzeichnet, dass** die Bohrvorrichtung ein Mittel zum Eliminieren des Einflusses des mechanischen Spiels in den Strukturen des genannten benachbart angeordneten Zylinders (s1) umfasst.

5. Eine Vorrichtung, wie sie in Anspruch 4 beschrieben wird, **dadurch gekennzeichnet, dass** die Bohrvorrichtung Stützelemente (29) umfasst, welche geeignet sind, tangentiale Kräfte auf den genannten benachbart angeordneten Zylinder (s1) auszuüben.

6. Eine Vorrichtung, wie sie in Anspruch 4 oder 5 beschrieben wird, **dadurch gekennzeichnet, dass** die genannten Stützelemente (29) pneumatische Zylinder sind, welche in das Fachwerk (2) der Vorrichtung hinein eingepasst sind und in ihren Betriebspositionen gegen den Zylinder (s2) gefahren werden, welcher maschinell bearbeitet werden soll.

## Revendications

1. Procédé permettant de percer des trous dans la coque d'un cylindre (s2) de machine à papier, avec ledit cylindre qui est maintenu dans sa position de fonctionnement dans une machine à papier, dans lequel procédé, un dispositif de perçage (1) est fixé sur le cylindre (s1) adjacent, **caractérisé en ce que** l'influence du jeu mécanique dans les structures dudit cylindre (s1) adjacent est supprimée avant le perçage.

2. Procédé selon la revendication 1, **caractérisé en ce que** le jeu mécanique est supprimé en appliquant un élément de support (29) sur ledit cylindre (s1) adjacent qui peut exercer des forces tangentielles sur ledit cylindre.

3. Procédé selon la revendication 1 ou 2, **caractérisé en ce que** sur le cylindre (s2) qui est usiné, on applique au moins un élément de support (29) qui fait partie du dispositif de perçage (1).

4. Dispositif permettant de percer des trous dans la coque du cylindre (s2) de machine à papier, ledit dispositif comprenant un châssis stationnaire adapté de manière à pouvoir être supporté sur les structures de la machine à papier et un châssis d'alimentation adapté de manière à être mobile le long dudit châssis stationnaire de manière radiale vers la coque dudit cylindre, ledit châssis d'alimentation supportant une pluralité de modules de perçage adaptés de manière rotative au moyen d'une unité d'entraînement, dans lequel le dispositif peut être fixé sur le cylindre (s1) adjacent, **caractérisé en ce que** le dispositif de perçage comprend des moyens pour supprimer l'influence du jeu mécanique dans les structures dudit cylindre (s1) adjacent.

5. Dispositif selon la revendication 4, **caractérisé en ce que** le dispositif de perçage comprend des éléments de support (29) capables d'exercer des forces tangentielles sur ledit cylindre (s1) adjacent.

6. Dispositif selon la revendication 4 ou 5, **caractérisé en ce que** lesdits éléments de support (29) sont des cylindres pneumatiques adaptés dans le châssis (2) du dispositif et sont dans leurs positions de fonctionnement, entraînés contre le cylindre (s2) à usiner.
